# FASCICULE DE BREVET EUROPEEN

(11) **EP 3 296 136 B1**
(45) Date de publication et mention de la délivrance du brevet: **06.11.2019**
(21) Numéro de dépôt: 17190431.1
(22) Date de dépôt: 11.09.2017
(51) Int. Cl.: B60K 15/077, B60K 15/03

(54) **DISPOSITIF ANTI CLAPOT D'UN RESERVOIR DE CARBURANT D'UN VEHICULE AUTOMOBILE**
ANTI-SCHWAPP-VORRICHTUNG EINES KRAFTSTOFFTANKS EINES KRAFTFAHRZEUGS
ANTI-SLOSH DEVICE OF A MOTOR VEHICLE FUEL TANK

(43) Date de publication de la demande: 21.03.2018
(73) Titulaire: RENAULT s.a.s., 92100 Boulogne-Billancourt (FR)
(72) Inventeur: BALAS, Oana Maria, sector 1 Bucuresti (RO)

(56) Documents cités:
- DE-A1- 10 260 952
- DE-A1-102015 204 031
- US-A1- 2004 173 616
- US-A1- 2006 220 370

## Description

L'invention concerne un dispositif anti-clapot d'un réservoir destiné à recevoir un liquide, notamment un réservoir de carburant et/ou un réservoir de véhicule automobile. L'invention porte aussi sur un système anti-clapot d'un réservoir destiné à recevoir un liquide, le système comprenant un tel dispositif anti-clapot. L'invention porte encore sur un dispositif de réservoir comprenant un tel dispositif anti-clapot ou un tel système anti-clapot. L'invention porte également sur un véhicule automobile comprenant un tel dispositif anti-clapot ou un tel système anti-clapot ou un tel dispositif de réservoir. L'invention porte enfin sur un procédé de réalisation d'un tel dispositif de réservoir.

Il est connu que dans les réservoirs destinés à contenir un liquide et qui sont mis en mouvement, il se produit, particulièrement lorsqu'ils sont partiellement remplis, un clapot. Le clapot consiste en une agitation du liquide et notamment de vagues et d'ondulations formées à la surface libre du liquide dans le réservoir. Cette agitation du liquide est due aux accélérations subies par le réservoir et le liquide lorsqu'ils sont mis en mouvement.

Ce phénomène de clapot génère du bruit ou du clapotis. Ce bruit est provoqué par les vagues et ondulations précédemment évoquées qui s'entrechoquent ou heurtent les parois du réservoir.

On comprend que, dans un véhicule automobile, ces phénomènes se produisent dans les réservoirs embarqués, notamment dans le réservoir de carburant ou dans tout autre réservoir destiné à recevoir un liquide. Le bruit ainsi généré se transmet dans la structure du véhicule et dans l'habitacle. Ce bruit est donc gênant et il est intéressant de trouver des solutions le limitant, voire le supprimant.

On connaît de l'état de la technique des réservoirs munis de cloisons internes créant des compartiments à l'intérieur des réservoirs. Ces cloisons sont perforées de sorte que le liquide peut passer de l'un à l'autre des compartiments.

Ces cloisons peuvent être rigides ou souples. Toutefois, dans tous les cas, la production d'un réservoir avec ces cloisons est compliquée et génératrice de coûts. Ceci complique en particulier le procédé de soufflage d'un réservoir réalisé en plastique.

Le document US 2006/220370 A1 décrit un dispositif anti-clapot selon le préambule de la revendication 1.

Le but de l'invention est de fournir un dispositif anti-clapot remédiant aux inconvénients ci-dessus et améliorant les dispositifs connus de l'art antérieur. En particulier, l'invention permet de réaliser un dispositif anti-clapot efficace et aisé à mettre en œuvre.

Selon l'invention, un dispositif anti-clapot est prévu pour équiper un réservoir destiné à recevoir un liquide, notamment un réservoir de carburant et/ou un réservoir pour véhicule automobile. Le dispositif comprend :
- une embase destinée à recevoir un organe monté dans le réservoir, comme notamment une pompe ou une jauge ou un module pompe-jauge ;
- au moins un ensemble de plaquettes articulées en liaison mécanique les unes aux autres ;
- un élément de rigidification de l'au moins un ensemble des plaquettes ;
le dispositif anti-clapot comprenant un élément de fixation au réservoir et l'embase étant liée mécaniquement à une extrémité de l'au moins un ensemble des plaquettes.

L'élément de rigidification et l'au moins un ensemble des plaquettes peuvent être agencés de sorte que, dans une première configuration, notamment une configuration détendue, de l'élément de rigidification, l'au moins un ensemble des plaquettes forme une structure lâche et, dans une deuxième configuration, notamment une configuration tendue, de l'élément de rigidification, l'au moins un ensemble des plaquettes forme une structure rigide.

Les plaquettes peuvent être articulées les unes aux autres à l'aide de liaisons pivot, notamment des liaisons pivot réalisées par des axes montés dans des alésages réalisés dans les plaquettes et/ou l'au moins un ensemble des plaquettes peut être articulé à l'embase à l'aide d'une liaison pivot, notamment une liaison pivot réalisée par un axe monté dans des alésages réalisés dans une plaquette d'extrémité de l'ensemble des plaquettes et dans l'embase.

L'élément de rigidification peut être un câble ou un fil.

Les plaquettes peuvent être identiques ou sensiblement identiques et/ou les plaquettes peuvent avoir une forme :
- globalement plane ; et/ou
- carrée ou sensiblement carrée ou rectangulaire ou sensiblement rectangulaire.

Des plaquettes peuvent comprendre au moins un ajour, notamment un ou deux ajours, par exemple un premier ajour sur une première partie de plaquette et un deuxième ajour sur une deuxième partie de plaquette.

Les ajours peuvent avoir la forme d'une rainure ou d'un trou oblong et/ou les ajours peuvent déboucher sur chaque face des palettes et/ou les ajours peuvent être orientés selon une direction inclinée relativement à la hauteur des plaquettes, notamment inclinés à 45° ou environ 45°.

Chaque plaquette peut présenter un chemin de guidage de l'élément de rigidification sur chacune de ces faces, notamment un chemin de guidage comprenant un canal ou un alésage réalisé dans la plaquette ou dans un bossage sur chaque face de la plaquette et/ou un chemin de guidage orienté selon la direction longitudinale des plaquettes ou sensiblement selon la direction longitudinale des plaquettes.

Dans la deuxième configuration de l'élément de rigidification, la structure rigide formée par l'au moins un ensemble des plaquettes peut avoir une forme droite ou rectiligne et/ou la structure rigide formée par l'au moins un ensemble des plaquettes peut s'étendre radialement ou sensiblement radialement depuis l'embase.

Selon l'invention, un système anti-clapot pour un réservoir destiné à recevoir un liquide, notamment un réservoir de carburant et/ou un réservoir pour véhicule automobile, comprend un dispositif défini précédemment et un organe monté ou destiné à être monté sur l'embase, comme notamment une pompe ou une jauge ou un module pompe-jauge.

Selon l'invention, un dispositif de réservoir comprend :
- un réservoir ; et
- un dispositif défini précédemment ou un système défini précédemment.

Selon l'invention, un véhicule automobile comprend un dispositif anti-clapot défini précédemment ou un système anti-clapot défini précédemment ou un dispositif de réservoir défini précédemment.

Selon l'invention, un procédé de réalisation d'un dispositif de réservoir défini précédemment comprend les étapes suivantes :
- Fourniture d'un réservoir ;
- Fourniture d'un dispositif anti-clapot défini précédemment ;
- Introduction du dispositif anti-clapot dans le réservoir ;
- Fourniture d'un organe ;
- Montage de l'organe sur le dispositif anti-clapot, sur l'embase, en faisant passer l'élément de rigidification de sa première configuration à sa deuxième configuration.

Le dessin annexé représente, à titre d'exemple, un mode de réalisation d'un dispositif anti-clapot pour réservoir selon l'invention, un mode de réalisation d'un système anti-clapot pour réservoir, un mode de réalisation d'un réservoir comprenant un dispositif ou un système anti-clapot évoqué précédemment et un mode de réalisation d'un véhicule automobile selon l'invention.
La figure 1 est une vue en perspective d'un mode de réalisation d'un système anti-clapot selon l'invention comprenant un organe et un mode de réalisation d'un dispositif anti-clapot selon l'invention, l'organe n'étant pas assemblé au dispositif anti-clapot.
La figure 2 est une vue en perspective du mode de réalisation du système anti-clapot, l'organe étant assemblé au dispositif anti-clapot.
La figure 3 est une vue en perspective d'un mode de réalisation d'une embase du mode de réalisation du dispositif anti-clapot selon l'invention.
Les figures 4 à 6 sont des vues en perspective du mode de réalisation de deux plaquettes articulées du mode de réalisation du dispositif anti capot selon l'invention.
La figure 7 est une vue en perspective d'un mode de réalisation de l'assemblage de l'embase à une plaquette du dispositif anti-clapot selon l'invention.
Les figures 8 et 9 sont des vues en perspective illustrant différentes étapes d'un mode d'exécution d'un procédé de montage d'un dispositif de réservoir selon l'invention.
La figure 10 est une vue schématique d'un mode de réalisation d'un véhicule automobile équipé d'un mode de réalisation d'un dispositif de réservoir selon l'invention.

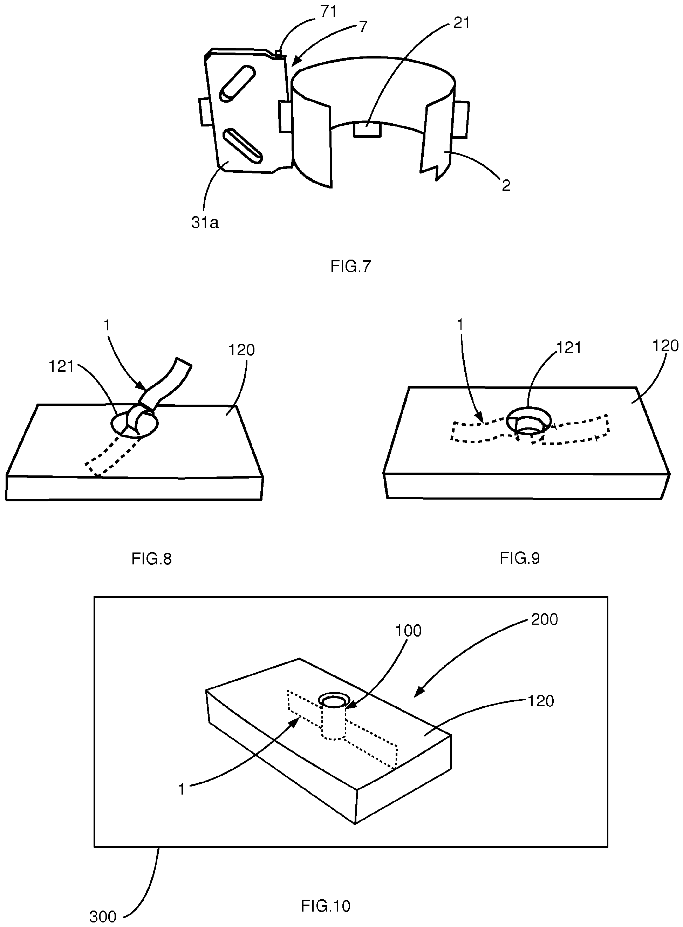

Un mode de réalisation d'un véhicule 300 est décrit ci-après en référence à la figure 10. Le véhicule est par exemple un véhicule automobile. Le véhicule comprend un dispositif de réservoir 200. Ce dispositif de réservoir est par exemple destiné à contenir un carburant liquide comme notamment de l'essence, du gazole ou du gaz de pétrole liquéfié. Il peut être destiné à stocker tout autre carburant et plus généralement à stocker tout autre liquide utile à bord du véhicule.

Le mode de réalisation du dispositif de réservoir 200 comprend :
- un réservoir 120 ; et
- un mode de réalisation d'un système 100 anti-clapot pour réservoir.

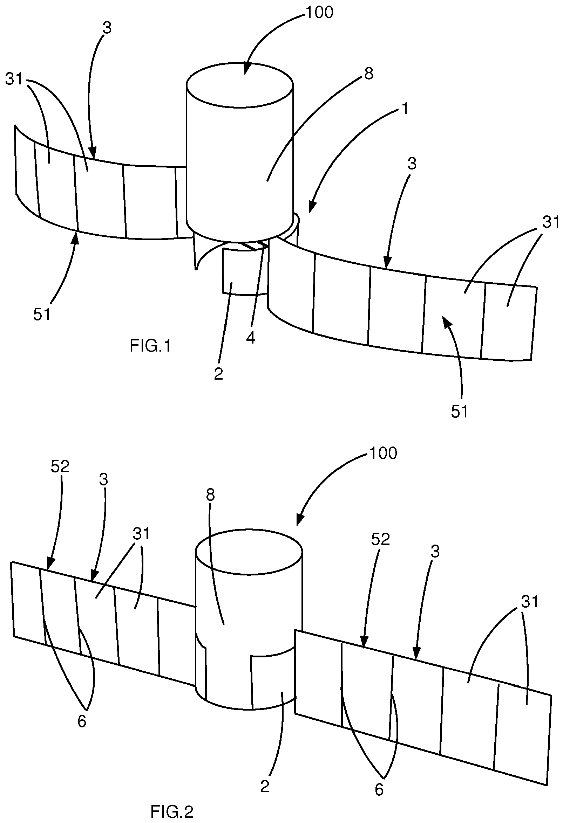

Un mode de réalisation d'un système 100 anti-clapot pour un réservoir 120 destiné à recevoir un liquide, est décrit ci-après en référence aux figures 1 et 2. Le système anti-clapot comprend un mode de réalisation d'un dispositif anti-clapot 1 et un organe 8 monté ou destiné à être monté sur le dispositif anti-clapot. L'organe 8 peut être de toute nature. L'organe a pour fonction de faire passer le dispositif anti-clapot d'un premier état ou d'une première configuration à un deuxième état ou à une deuxième configuration lorsqu'il est monté sur le dispositif anti-clapot. L'organe peut aussi avoir une autre fonction notamment une fonction utile dans un réservoir de liquide. Par exemple, l'organe peut être une pompe ou une jauge ou un module pompe-jauge.

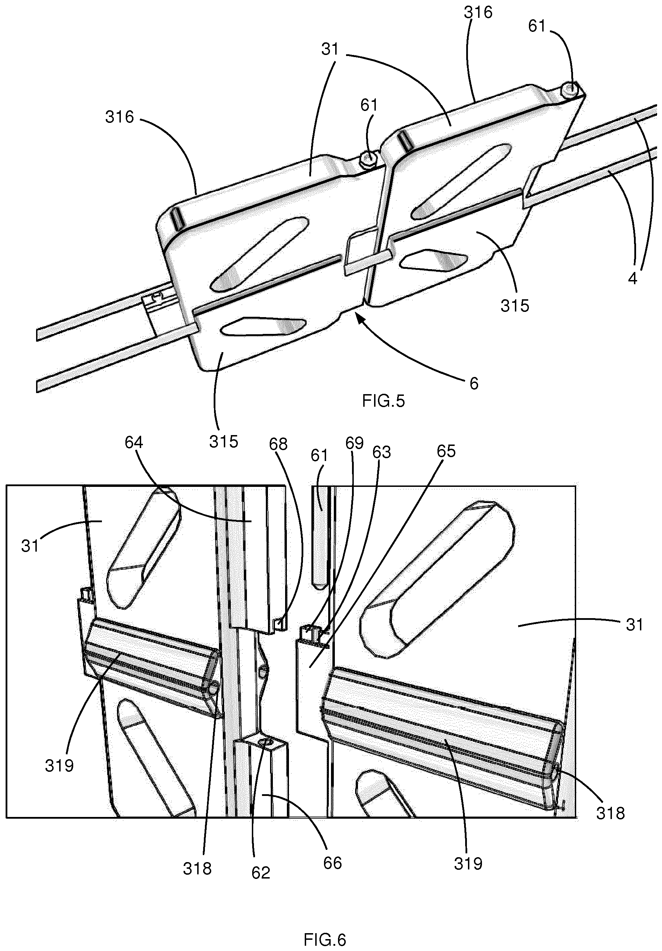

Un mode de réalisation du dispositif anti-clapot pour réservoir est décrit ci-après en référence aux figures 1 à 7. Le dispositif anti-clapot comprend :
- une embase 2 destinée à recevoir l'organe 8 monté dans le réservoir, comme notamment une pompe ou une jauge ou un module pompe-jauge ;
- au moins un ensemble 3 de plaquettes 31 articulées en liaison mécanique les unes aux autres ;
- un élément 4 de rigidification de l'au moins un ensemble des plaquettes.

Le dispositif anti-clapot comprend par ailleurs un élément de fixation 21 au réservoir, notamment à une paroi du réservoir. L'élément de fixation est par exemple prévu sur l'embase 2. Par ailleurs, l'embase est liée mécaniquement à une extrémité de l'au moins un ensemble des plaquettes. Le dispositif anti-clapot peut être fixé au réservoir via l'organe 8.

Dans le mode de réalisation représenté, le dispositif anti-clapot comprend deux ensembles 3 de plaquettes 31 articulées en liaison mécanique les unes aux autres. Chaque ensemble étant relié à l'embase. Alternativement, le dispositif anti-clapot peut comprendre plus de deux ensembles de plaquettes articulées en liaison mécanique les unes aux autres.

Avantageusement, l'élément de rigidification et l'au moins un ensemble des plaquettes est agencé de sorte que, dans une première configuration, notamment une configuration détendue de l'élément de rigidification, l'au moins un ensemble des plaquettes forme une structure lâche 51 (représentée sur les figures 1, 8 et 9) et, dans une deuxième configuration, notamment une configuration tendue de l'élément de rigidification, l'au moins un ensemble des plaquettes forme une structure rigide 52 (représentée sur les figures 2 et 10).

L'embase 2 du mode de réalisation représenté a globalement une forme annulaire ouverte. L'alésage de l'embase est prévu pour recevoir l'organe 8. Autrement dit, l'organe est destiné à être monté sur le dispositif anti-clapot, dans l'embase 2. Comme il sera vu plus loin, ce montage déforme l'embase et/ou l'élément 4 de rigidification. De ce fait, le montage de l'organe sur le dispositif anti-clapot provoque l'activation de l'élément de rigidification et donc le passage de la configuration de l'au moins un ensemble 3 de plaquettes 31 d'une structure lâche à une structure rigide. L'embase pourrait avoir toute autre forme. Toutefois, l'embase présente un élément de réception, voire un moyen de logement de l'organe 8.

L'embase 2 comprend de préférence des moyens de fixation 21 de l'embase au réservoir 120, en particulier au fond du réservoir. Notamment, les moyens de fixation peuvent être des moyens d'encliquetage. Ces moyens permettent d'assurer la fixation du dispositif anti-clapot au réservoir 120. Ces moyens pourraient être disposés à tout autre endroit du dispositif anti-clapot, notamment sur tout autre élément du dispositif anti-clapot.

Les plaquettes peuvent de préférence être identiques ou sensiblement identiques. Les plaquettes peuvent avoir une forme :
- globalement plane ; et/ou
- carrée ou sensiblement carrée ou rectangulaire ou sensiblement rectangulaire.

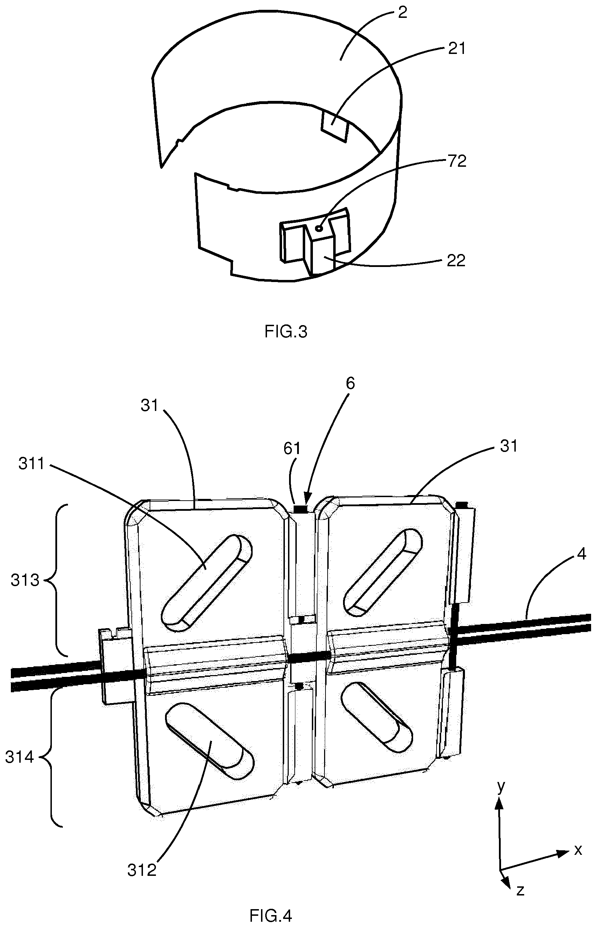

Dans le mode de réalisation représenté sur les figures, les plaquettes sont identiques. Les plaquettes ont sensiblement une forme rectangulaire. Les plaquettes sont par exemple réalisées en matière plastique. Les plaquettes sont en outre sensiblement planes. Pour simplifier la description qui va suivre, on associe, à chaque plaquette, un repère composé par les directions orthogonales x, y et z comme représenté sur la figure 4. Les plaquettes s'étendent selon les plans x, y. On mesure la longueur d'une plaquette selon la direction longitudinale x, on mesure la hauteur de la plaquette selon la direction y et on mesure l'épaisseur de la plaquette selon la direction z. Dans le mode de réalisation représenté, les plaquettes sont sensiblement rectangulaires. Leur longueur selon la direction x est par exemple inférieure à leur hauteur selon la direction y. Leur épaisseur selon la direction z est par exemple très inférieure à leur hauteur selon la direction y et à leur longueur selon la direction x.

De préférence, les plaquettes sont articulées les unes aux autres à l'aide de liaisons pivot 6, notamment des liaisons pivot réalisées par des axes 61 montés dans des alésages 62, 63 réalisés dans les plaquettes. De préférence, les liaisons pivot sont orientées selon les directions y. Dans le mode de réalisation représenté, les liaisons pivot sont réalisées par des charnières. Ainsi, une première plaquette présente sur un de ses chants sur la hauteur un ou deux prolongements 64, 66 percés par un alésage 62 et une deuxième plaquette (adjacente à la première plaquette) présente sur un de ses chants sur la hauteur un prolongement 65 percé par un alésage 72. L'ensemble de plaquettes et l'embase sont assemblés en alignant les alésages 62 et 72 et en introduisant dans ceux-ci l'axe 71.

De préférence encore, l'au moins un ensemble des plaquettes est articulé à l'embase à l'aide d'une liaison pivot 7, notamment une liaison pivot réalisée par un axe 71 monté dans un alésage réalisé dans une plaquette d'extrémité 31a de l'ensemble des plaquettes et dans un alésage 72 réalisé dans l'embase. Par exemple, la liaison pivot entre l'ensemble de plaquettes et l'embase peut être réalisée comme les liaisons entre plaquettes adjacentes. Dans le mode de réalisation représenté, la liaison pivot est réalisée par une charnière. Ainsi, une plaquette présente sur un de ses chants sur la hauteur un ou deux prolongements 64, 66 percés par un alésage 62 et l'embase présente un prolongement 22 percé par un alésage 72. Comme représenté sur la figure 7, l'ensemble de plaquettes et l'embase sont assemblés en alignant les alésages 62 et 63 et en introduisant dans ceux-ci l'axe 61. Les plaquettes adjacentes sont ainsi liées par une liaison pivot.

De préférence, les plaquettes comprennent au moins un ajour 311, 312, notamment un ou deux ajours, par exemple un premier ajour 311 sur une première partie 313 de plaquette et un deuxième ajour sur une deuxième partie 314 de plaquette. Ces ajours peuvent être réalisés sous forme de rainures ou de trous oblongs. Ces ajours peuvent déboucher sur chaque face 315, 316 des palettes. Les ajours peuvent encore être orientés selon une direction inclinée relativement à la hauteur y des plaquettes, notamment inclinés à 45° ou environ 45°. Dans le mode de réalisation représenté, des plaquettes ou chaque plaquette comprend deux ajours. Par exemple, un premier ajour 311 est réalisé dans une première partie 313 supérieure de la plaquette (relativement à la hauteur de la plaquette) et un deuxième ajour 312 est réalisé dans une deuxième partie 314 inférieure de la plaquette (relativement à la hauteur de la plaquette).

Chaque plaquette présente un chemin de guidage 318 de l'élément de rigidification sur chacune de ses faces 315, 316, notamment un chemin de guidage comprenant un canal ou un alésage 318 réalisé dans la plaquette ou dans un bossage 319 sur chaque face 315, 316 de la plaquette. De préférence, le chemin de guidage est orienté selon la direction longitudinale x des plaquettes ou sensiblement selon la direction longitudinale des plaquettes. De préférence encore, le chemin de guidage est positionné au milieu des plaquettes relativement à leur hauteur.

Avantageusement, l'élément de rigidification est un câble 4 ou un fil. Il est enfilé dans les chemins de guidage 318 de chaque face. Il passe successivement dans les chemins de guidage disposés sur les mêmes faces 315 des différentes plaquettes de l'ensemble de plaquettes puis, après avoir atteint l'extrémité libre de l'ensemble des plaquette revient vers l'embase en passant successivement dans les chemins de guidage disposés sur les faces opposées 316 des différentes plaquettes. Le même élément de rigidification 4 peut être utilisé pour passer dans les plaquettes de différents ensembles de plaquettes liés à l'embase comme on peut le voir sur la figure 1. Alternativement, autant d'éléments de rigidification que d'ensembles de plaquettes peuvent être utilisés. Dans tous les cas, l'élément de rigidification est agencé de sorte à être tendu lorsque l'organe 8 est monté sur le dispositif anti-clapot.

Dans la deuxième configuration de l'élément de rigidification, la structure rigide 52 formée par l'au moins un ensemble des plaquettes a une forme droite ou rectiligne. La structure rigide 52 formée par l'au moins un ensemble des plaquettes s'étend de préférence radialement ou sensiblement radialement depuis l'embase.

Les articulations et les chemins de guidage sont agencés de sorte que lorsque l'élément de rigidification est tendu, l'ensemble des plaquettes se positionne dans la deuxième configuration ou position prédéfinie pour former la structure rigide. Dans le mode de réalisation décrit, la structure rigide est telle que les différentes plaquettes sont positionnées alignées ou dans un même plan. Par exemple, toutes les plaquettes sont positionnées de sorte que leurs plans x, y soient confondus.

La longueur de câble constituant l'élément de rigidification est fonction de la géométrie du dispositif, notamment fonction des longueurs des chemins de guidage 318 et de l'élasticité du câble. Ceci permet de déterminer la longueur de câble avant qu'il ne soit sollicité par le montage de l'organe 8. On utilise un coefficient, par exemple compris entre 0 et 10%, pour tenir compte de de l'élasticité du câble utilisé.

De préférence, des éléments 68, 69 de limitation sont prévus sur les plaquettes pour limiter l'amplitude de pivotement des liaisons pivot 6. Cette amplitude de pivotement est par exemple de 40° autour de la position dans laquelle les plaquettes sont alignées. Les éléments de limitation comprennent par exemple une rainure 68 prévue dans un prolongement 64 sur une plaquette et un pion 69 prévu sur le prolongement 63 de la plaquette adjacente. La rainure 68 et le pion 69 coopèrent par obstacle pour limiter la rotation autour de la liaison pivot 6. Le jeu entre la rainure 68 et le pion 69 assure la mobilité des plaquettes avec la possibilité de les orienter entre elles.

Un mode d'exécution du procédé de réalisation d'un dispositif de réservoir selon l'invention est décrit ci-après en référence à la figure 10.

Dans une première étape, on fournit un réservoir 120, un réservoir de carburant liquide pour véhicule automobile. Ce réservoir comprend une ouverture 121 prévue notamment pour le montage du dispositif anti-clapot et de l'organe 8.

Dans une deuxième étape, on fournit un dispositif anti-clapot 1 tel que décrit précédemment.

Dans une troisième étape, comme représenté sur la figure 8, on introduit le dispositif anti-clapot dans le réservoir en le faisant passer par l'ouverture 121. On remarque que, pour la mise en œuvre de cette étape, le dispositif anti-clapot est dans sa première configuration qui est telle que les ensembles de plaquettes forment des structures lâches. Ainsi, le dispositif anti-clapot peut être déformé de sorte à être introduit aisément dans le réservoir. Par exemple, les ensembles de plaquettes peuvent être enroulées autour de l'embase 2.

Dans une quatrième étape, comme représenté sur la figure 9, on fixe le dispositif au réservoir, par exemple au fond du réservoir. Par exemple, on utilise les moyens de fixation 21 pour ce faire. Le dispositif anti-clapot peut donc être fixé au réservoir au niveau de l'embase 2.

Dans une cinquième étape, on fournit l'organe 8 et on le monte sur le dispositif anti-clapot, notamment on le monte sur l'embase. Par exemple, ce montage peut se faire par fixation de l'organe dans un logement de l'embase destiné à le recevoir. Il est à noter que l'organe et/ou le dispositif anti-clapot sont agencés de sorte que le montage de l'organe sur le dispositif crée une action sur l'élément de rigidification, le faisant passer de sa première configuration à sa deuxième configuration. De préférence, l'action sur l'élément de rigidification est exercée par l'organe qui déforme l'élément de rigidification dans le logement prévu dans l'embase pour recevoir l'organe. Comme vu précédemment, les ensembles des plaquettes passent donc d'une première configuration en forme de structures lâches 51 (représentée sur les figures 1, 8 et 9) à une deuxième configuration en forme de structures rigides 52 (représentée sur les figures 2 et 10). Pour maintenir la tension de l'élément 4 de rigidification, l'organe 8, arrivant en position finale dans le réservoir, est fixé à une partie supérieure du réservoir (par exemple sans aucun degré de liberté).

Le dispositif de réservoir 200 est ainsi obtenu.

En variante, l'organe pourrait être fixé sur le dispositif anti-clapot avant que le dispositif anti-clapot soit fixé au réservoir.

Dans leur première configuration, les ensembles de plaquettes facilitent le montage dans le réservoir et, dans leur deuxième configuration, les ensembles de plaquettes assurent leur fonction en limitant le clapot, le clapotis s'en trouve lui aussi limité et le confort sonore dans le véhicule embarquant un tel réservoir est amélioré.

Dans le présent document, par « structure rigide », on entend une structure avec une liberté de pivotement entre 0 et 2° au niveau des liaisons pivot 6. De cette manière on assure, en fonctionnement, un déplacement maximal de l'ensemble 3, de 3% de la longueur de l'ensemble 3.

Dans le présent document, par « structure lâche », on entend une structure avec une liberté de pivotement de par exemple 40° au niveau des liaisons pivot 6.

## Revendications

1. Dispositif (1) anti-clapot pour un réservoir (120) destiné à recevoir un liquide, notamment un réservoir de carburant et/ou un réservoir pour véhicule automobile (300), le dispositif comprenant :
- une embase (2) destinée à recevoir un organe (8) monté dans le réservoir, comme notamment une pompe ou une jauge ou un module pompe-jauge ;
- un élément de fixation (21) au réservoir ; et
- au moins un ensemble (3) de plaquettes (31); **caractérisé en ce que**
- les plaquettes (31) de l'au moins un ensemble sont articulées en liaison mécanique les unes aux autres ;
- l'embase (2) est liée mécaniquement à une extrémité de l'au moins un ensemble (3) des plaquettes (31) ; et
- le dispositif comprend en outre un élément (4) de rigidification de l'au moins un ensemble des plaquettes.

2. Dispositif selon la revendication précédente, **caractérisé en ce que** l'élément de rigidification et l'au moins un ensemble des plaquettes sont agencés de sorte que, dans une première configuration, notamment une configuration détendue, de l'élément de rigidification, l'au moins un ensemble des plaquettes forme une structure lâche (51) et, dans une deuxième configuration, notamment une configuration tendue, de l'élément de rigidification, l'au moins un ensemble des plaquettes forme une structure rigide (52).

3. Dispositif selon la revendication 1 ou 2, **caractérisé en ce que** les plaquettes sont articulées les unes aux autres à l'aide de liaisons pivot (6), notamment des liaisons pivot réalisées par des axes (61) montés dans des alésages (62) réalisés dans les plaquettes et/ou **en ce que** l'au moins un ensemble des plaquettes est articulé à l'embase à l'aide d'une liaison pivot (7), notamment une liaison pivot réalisée par un axe (71) monté dans des alésages réalisés dans une plaquette d'extrémité (31a) de l'ensemble des plaquettes et dans l'embase.

4. Dispositif selon l'une des revendications précédentes, **caractérisé en ce que** l'élément de rigidification est un câble (4) ou un fil.

5. Dispositif selon l'une des revendications précédentes, **caractérisé en ce que** les plaquettes sont identiques ou sensiblement identiques et/ou **en ce que** les plaquettes ont une forme :
- globalement plane ; et/ou
- carrée ou sensiblement carrée ou rectangulaire ou sensiblement rectangulaire.

6. Dispositif selon l'une des revendications précédentes, **caractérisé en ce que** des plaquettes comprennent au moins un ajour (311, 312), notamment un ou deux ajours, par exemple un premier ajour (311) sur une première partie (313) de plaquette et un deuxième ajour sur une deuxième partie (314) de plaquette.

7. Dispositif selon la revendication précédente, **caractérisé en ce que** les ajours ont la forme d'une rainure ou d'un trou oblong et/ou **en ce que** les ajours débouchent sur chaque face (315, 316) des palettes et/ou **en ce que** les ajours sont orientés selon une direction inclinée relativement à la hauteur (y) des plaquettes, notamment inclinés à 45° ou environ 45°.

8. Dispositif selon l'une des revendications précédentes, **caractérisé en ce que** chaque plaquette présente un chemin de guidage (318) de l'élément de rigidification sur chacune de ces faces (315, 316), notamment un chemin de guidage comprenant un canal ou un alésage (318) réalisé dans la plaquette ou dans un bossage (319) sur chaque face (315, 316) de la plaquette et/ou un chemin de guidage orienté selon la direction longitudinale (x) des plaquettes ou sensiblement selon la direction longitudinale des plaquettes.

9. Dispositif selon l'une des revendications précédentes, **caractérisé en ce que**, dans la deuxième configuration de l'élément de rigidification, la structure rigide (52) formée par l'au moins un ensemble des plaquettes a une forme droite ou rectiligne et/ou la structure rigide (52) formée par l'au moins un ensemble des plaquettes s'étend radialement ou sensiblement radialement depuis l'embase.

10. Système (100) anti-clapot pour un réservoir (120) destiné à recevoir un liquide, notamment un réservoir de carburant et/ou un réservoir pour véhicule automobile (300), le système comprenant un dispositif selon l'une des revendications précédentes et un organe (8) monté ou destiné à être monté sur l'embase, comme notamment une pompe ou une jauge ou un module pompe-jauge.

11. Dispositif de réservoir (200) comprenant :
- un réservoir (120) ; et
- un dispositif (1) selon l'une des revendications 1 à 9 ou un système (100) selon la revendication précédente.

12. Véhicule automobile (300) comprenant un dispositif (1) anti-clapot selon l'une des revendications 1 à 9 ou un système (100) anti-clapot selon la revendication 10 ou un dispositif de réservoir (200) selon la revendication 11.

13. Procédé de réalisation d'un dispositif de réservoir selon la revendication 11, le procédé comprenant les étapes suivantes :
- Fourniture d'un réservoir (120) ;
- Fourniture d'un dispositif (1) anti-clapot selon l'une des revendications 1 à 9 ;
- Introduction du dispositif anti-clapot dans le réservoir ;
- Fourniture d'un organe (8) ;
- Montage de l'organe sur le dispositif anti-clapot, sur l'embase, en faisant passer l'élément de rigidification de sa première configuration à sa deuxième configuration.

## Patentansprüche

1. Schwappschutzvorrichtung (1) für einen Tank (120), der zur Aufnahme einer Flüssigkeit bestimmt ist, insbesondere einen Treibstofftank und/oder einen Tank für ein Kraftfahrzeug (300), wobei die Vorrichtung enthält:
- einen Sockel (2), der dazu bestimmt ist, ein in den Tank montiertes Bauteil (8) aufzunehmen, wie insbesondere eine Pumpe oder einen Messstab oder ein Pumpe-Messstab-Modul;
- ein Element zur Befestigung (21) am Tank; und
- mindestens eine Baueinheit (3) von Platten (31) ;
**dadurch gekennzeichnet, dass**
- die Platten (31) der mindestens einen Baueinheit in mechanischer Verbindung aneinander angelenkt sind;
- der Sockel (2) mechanisch mit einem Ende der mindestens einen Baueinheit (3) der Platten (31) verbunden ist; und
- die Vorrichtung außerdem ein Element (4) zur Versteifung der mindestens einen Baueinheit der Platten enthält.

2. Vorrichtung nach dem vorhergehenden Anspruch, **dadurch gekennzeichnet, dass** das Versteifungselement und die mindestens eine Baueinheit der Platten so angeordnet sind, dass in einer ersten Konfiguration, insbesondere einer entspannten Konfiguration, des Versteifungselements die mindestens eine Baueinheit der Platten eine lockere Struktur (51) bildet, und in einer zweiten Konfiguration, insbesondere einer gespannten Konfiguration, des Versteifungselements die mindestens eine Baueinheit der Platten eine steife Struktur (52) bildet.

3. Vorrichtung nach Anspruch 1 oder 2, **dadurch gekennzeichnet, dass** die Platten mit Hilfe von Drehzapfenverbindungen (6) aneinander angelenkt sind, insbesondere Drehzapfenverbindungen, die durch Achsen (61) hergestellt werden, die in in den Platten hergestellte Bohrungen (62) montiert sind, und/oder dass die mindestens eine Baueinheit der Platten mit Hilfe einer Drehzapfenverbindung (7) an den Sockel angelenkt ist, insbesondere eine Drehzapfenverbindung, die von einer Achse (71) hergestellt wird, die in Bohrungen montiert ist, die in einer Endplatte (31a) der Baueinheit der Platten und im Sockel hergestellt sind.

4. Vorrichtung nach einem der vorhergehenden Ansprüche, **dadurch gekennzeichnet, dass** das Versteifungselement ein Kabel (4) oder ein Draht ist.

5. Vorrichtung nach einem der vorhergehenden Ansprüche, **dadurch gekennzeichnet, dass** die Platten gleich oder im Wesentlichen gleich sind, und/oder dass die Platten eine Form haben:
- insgesamt eben; und/oder
- viereckig oder im Wesentlichen viereckig, oder rechtwinklig oder im Wesentlichen rechtwinklig.

6. Vorrichtung nach einem der vorhergehenden Ansprüche, **dadurch gekennzeichnet, dass** Platten mindestens einen Durchbruch (311, 312), insbesondere einen oder zwei Durchbrüche enthalten, zum Beispiel einen ersten Durchbruch (311) in einem ersten Plattenteil (313) und einen zweiten Durchbruch in einem zweiten Plattenteil (314) .

7. Vorrichtung nach dem vorhergehenden Anspruch, **dadurch gekennzeichnet, dass** die Durchbrüche die Form einer Rille oder eines Langlochs haben, und/oder dass die Durchbrüche an jeder Seite (315, 316) der Platten münden, und/oder dass die Durchbrüche gemäß einer geneigten Richtung bezüglich der Höhe (y) der Platten ausgerichtet sind, insbesondere um 45° oder etwa 45° geneigt.

8. Vorrichtung nach einem der vorhergehenden Ansprüche, **dadurch gekennzeichnet, dass** jede Platte einen Führungsweg (318) des Versteifungselements auf jeder dieser Seiten (315, 316) aufweist, insbesondere einen Führungsweg, der einen Kanal oder eine Bohrung (318) enthält, der/die in der Platte oder in einer Wölbung (319) auf jeder Seite (315, 316) der Platte hergestellt ist, und/oder einen Führungsweg, der gemäß der Längsrichtung (x) der Platten oder im Wesentlichen gemäß der Längsrichtung der Platten ausgerichtet ist.

9. Vorrichtung nach einem der vorhergehenden Ansprüche, **dadurch gekennzeichnet, dass** in der zweiten Konfiguration des Versteifungselements die von der mindestens einen Baueinheit der Platten gebildete steife Struktur (52) eine gerade oder geradlinige Form hat, und/oder die von der mindestens einen Baueinheit von Platten gebildete steife Struktur (52) sich ausgehend vom Sockel radial oder im Wesentlichen radial erstreckt.

10. Schwappschutzsystem (100) für einen Tank (120), der zur Aufnahme einer Flüssigkeit bestimmt ist, insbesondere einen Treibstofftank und/oder einen Tank für ein Kraftfahrzeug (300), wobei das System eine Vorrichtung nach einem der vorhergehenden Ansprüche und ein Bauteil (8) enthält, das auf den Sockel montiert oder dazu bestimmt ist, auf den Sockel montiert zu werden, wie insbesondere eine Pumpe oder ein Messstab oder ein Pumpe-Messstab-Modul.

11. Tankvorrichtung (200), die enthält:
- einen Tank (120); und
- eine Vorrichtung (1) nach einem der Ansprüche 1 bis 9 oder ein System (100) nach dem vorhergehenden Anspruch.

12. Kraftfahrzeug (300), das eine Schwappschutzvorrichtung (1) nach einem der Ansprüche 1 bis 9 oder ein Schwappschutzsystem (100) nach Anspruch 10 oder eine Tankvorrichtung (200) nach Anspruch 11 enthält.

13. Verfahren zur Herstellung einer Tankvorrichtung nach Anspruch 11, wobei das Verfahren die folgenden Schritte enthält:
- Bereitstellen eines Tanks (120);
- Bereitstellen einer Schwappschutzvorrichtung (1) nach einem der Ansprüche 1 bis 9;
- Einführen der Schwappschutzvorrichtung in den Tank;
- Bereitstellen eines Bauteils (8);
- Montage des Bauteils auf die Schwappschutzvorrichtung, auf den Sockel, indem das Versteifungselement von seiner ersten Konfiguration in seine zweite Konfiguration gebracht wird.

## Claims

1. Anti-slosh device (1) for a tank (120) intended to receive a liquid, in particular a fuel tank and/or a tank for a motor vehicle (300), the device comprising:
- a base (2) intended to receive a member (8) mounted in the tank, such as in particular a pump or a gauge or a pump-gauge module;
- an element (21) for fastening to the tank; and
- at least one set (3) of plates (31); **characterized in that**
- the plates (31) of the at least one set are articulated in a mechanically connected manner to one another;
- the base (2) is mechanically connected to one end of the at least one set (3) of the plates (31); and
- the device additionally comprises an element (4) for stiffening the at least one set of plates.

2. Device according to the preceding claim, **characterized in that** the stiffening element and the at least one set of plates are arranged such that, in a first configuration, in particular a relaxed configuration, of the stiffening element, the at least one set of plates forms a slack structure (51) and, in a second configuration, in particular a taut configuration, of the stiffening element, the at least one set of plates forms a rigid structure (52) .

3. Device according to Claim 1 or 2, **characterized in that** the plates are articulated to one another by means of pivot connections (6), in particular pivot connections embodied by pins (61) mounted in bores (62) made in the plates and/or **in that** the at least one set of plates is articulated to the base by means of a pivot connection (7), in particular a pivot connection embodied by a pin (71) mounted in bores made in an end plate (31a) of the set of plates and in the base.

4. Device according to one of the preceding claims, **characterized in that** the stiffening element is a cable (4) or a wire.

5. Device according to one of the preceding claims, **characterized in that** the plates are identical or substantially identical and/or **in that** the plates have:
- a globally planar shape; and/or
- a square or substantially square or rectangular or substantially rectangular shape.

6. Device according to one of the preceding claims, **characterized in that** the plates comprise at least one aperture (311, 312), in particular one or two apertures, for example a first aperture (311) on a first plate part (313) and a second aperture on a second plate part (314).

7. Device according to the preceding claim, **characterized in that** the apertures have the form of a slot or of an oblong hole and/or **in that** the apertures open onto each face (315, 316) of the plates and/or **in that** the apertures are oriented in a direction inclined relative to the height (y) of the plates, in particular at an inclination of 45° or approximately 45°.

8. Device according to one of the preceding claims, **characterized in that** each plate has a guideway (318) for the stiffening element on each of said faces (315, 316), in particular a guideway comprising a duct or a bore (318) made in the plate or in a boss (319) on each face (315, 316) of the plate and/or a guideway oriented in the longitudinal direction (x) of the plates or substantially in the longitudinal direction of the plates.

9. Device according to one of the preceding claims, **characterized in that**, in the second configuration of the stiffening element, the rigid structure (52) formed by the at least one set of plates has a straight or rectilinear shape and/or the rigid structure (52) formed by the at least one set of plates extends radially or substantially radially from the base.

10. Anti-slosh system (100) for a tank (120) intended to receive a liquid, in particular a fuel tank and/or a tank for a motor vehicle (300), the system comprising a device according to one of the preceding claims and a member (8) mounted or intended to be mounted on the base, such as in particular a pump or a gauge or a pump-gauge module.

11. Tank device (200) comprising:
- a tank (120); and
- a device (1) according to one of Claims 1 to 9 or a system (100) according to the preceding claim.

12. Motor vehicle (300) comprising an anti-slosh device (1) according to one of Claims 1 to 9 or an anti-slosh system (100) according to Claim 10 or a tank device (200) according to Claim 11.

13. Method for producing a tank device according to Claim 11, the method comprising the following steps:
- providing a tank (120);
- providing an anti-slosh device (1) according to one of Claims 1 to 9;
- introducing the anti-slosh device into the tank;
- providing a member (8);
- mounting the member on the anti-slosh device, on the base, by passing the stiffening element from its first configuration to its second configuration.
